# EUROPEAN PATENT APPLICATION

(11) **EP 1 126 659 A2**
(43) Date of publication of application: **22.08.2001**
(21) Application number: 01103480.8
(22) Date of filing: 14.02.2001
(51) Int. Cl.: H04L 12/24

(54) **Method and apparatus for data transmission management**

(30) Priority: 18.02.2000 JP 2000046842
(71) Applicant: SONY CORPORATION, Tokyo (JP)
(72) Inventor: Jinushi, Kotaro, c/o Sony Corporation, Tokyo (JP); Hasegawa Junichi, c/o Sony Corporation, Tokyo (JP); Kokubun, Kimio, c/o Sony Corporation, Tokyo (JP)
(74) Representative: Melzer, Wolfgang, Dipl.-Ing.

(57) **Abstract**

When a data transmission apparatus transmits data to a data reception apparatus, a band management table storage section 32 maintains a backbone band management table. This table describes band availability identification information based on relationship between a split band obtained by dividing a data communication band and a band transmission time interval for each split band via a communication line. A global resource management table storage section 33 maintains a global resource management table which indicates states of a data transmission apparatus and a data reception apparatus. A table management section 36 references a backbone band management table and a global resource management table based on a transmission condition request from a data transmission apparatus. An alternative creation section 37 creates an alternative transmission condition indicative of a condition-for allowing a data transmission apparatus to send data to a data reception apparatus. Alternative transmission condition information is sent to a data transmission apparatus.

## Description

### BACKGROUND OF THE INVENTION

### Technical Field

The present invention relates to a data transmission management apparatus, a method thereof, data transmission system, and a data transmission method for managing data transmission in response to a request from a data transmission apparatus when a data transmission apparatus transmits data to a data reception apparatus via a communication line.

### Prior Art

Conventionally, a conventional data transmission system uses a data transmission apparatus to transmit a large amount of data streams or files to a data reception apparatus via a communication line. In many cases, different network systems are applied to a network for transmitting data streams concerning chronological video, music, and the like and to a network for transmitting file-format data. Accordingly, the conventional data transmission from a data transmission apparatus to a data reception apparatus uses a data stream transmission network for transmitting data streams and uses a file transfer network for transferring files.

None of conventional data transmission system implement data stream transmission and file transfer on the same network.

When a communication line is reserved for use during data transmission from the data transmission apparatus to the data reception apparatus, the data transmission apparatus acquires information just about whether the communication line is available or not. When the system rejects a transmission condition request from the data transmission apparatus, there is not provided an alternative or the like for the transmission condition. Accordingly, the data transmission apparatus needs to retrieve an alternative to the transmission condition requested by the data transmission apparatus itself each time this request is rejected. There is the problem that many steps are needed for retrieval when a transmission condition is specified for data transmission. Such a data transmission system requires users to do complicated works when handling the data transmission apparatus.

### BRIEF SUMMARY OF THE INVENTION

The present invention has been made in consideration of the foregoing. It is therefore an object of the present invention to provide a data transmission management apparatus, a method thereof, data transmission system, and a data transmission method which can provide an alternative to a transmission condition for data transmission according to this condition requested from a data transmission apparatus.

In order to solve the above-mentioned problems, a data transmission management apparatus according to the present invention comprises communication means for connecting a data transmission apparatus for data transmission with a data reception apparatus for receiving data sent from the data transmission apparatus via a communication line; storage means for storing a band management table describing band availability identification information based on relationship between a split band obtained by dividing a data communication band and a band transmission time interval for each split band via a communication line and resource management information indicating states of a data transmission apparatus and a data reception apparatus connected to the communication means; and alternative transmission condition information creation means for referencing the band management table and the resource management information stored in the storage means based on a transmission condition request received by the communication means from a data transmission apparatus via a communication line, creating an alternative transmission condition indicative of a condition for allowing the data transmission apparatus to send data to the data reception apparatus, and controlling the communication means in order to send alternative transmission condition information to the data transmission apparatus.

In order to solve the above-mentioned problems, a data transmission management method according to the present invention, when transmitting data from a data transmission apparatus to a data reception apparatus via a communication line, comprises the steps of: creating a band management table describing band availability identification information based on relationship between a split band obtained by dividing a data communication band and a band transmission time interval for each split band via a communication line and resource management information indicating states of a data transmission apparatus and a data reception apparatus connected to the communication means; referencing the band management table and the resource management information based on a transmission condition request from a data transmission apparatus via a communication line and creating an alternative transmission condition indicative of a condition for allowing a data transmission apparatus to send data to a data reception apparatus; and transmitting alternative transmission condition information to a data transmission apparatus.

In order to solve the above-mentioned problems, a data transmission system according to the present invention comprises a data transmission apparatus for sending data via a communication line; a data reception apparatus for receiving data sent from the data transmission apparatus via a communication line; and a data transmission management apparatus having communication means for connecting the data transmission apparatus with the data reception apparatus via a communication line, storage means for storing a band management table describing band availability identification information based on relationship between a split band obtained by dividing a data communication band and a band transmission time interval for each split band via a communication line and resource management information indicating states of the data transmission apparatus and the data reception apparatus connected to the communication means, and alternative transmission condition information creation means for referencing a band management table and resource management information stored in the storage means based on a transmission condition request received by the communication means from the data transmission apparatus via a communication line, creating an alternative transmission condition indicative of a condition for allowing the data transmission apparatus to send data to the data reception apparatus, and controlling the communication means in order to send alternative transmission condition information to the data transmission apparatus. In this data transmission system, the data transmission apparatus sends, to the data transmission management apparatus, information for reserving data transmission according to a transmission condition based on alternative transmission condition information sent from the data transmission management apparatus. The data transmission management apparatus reserves data transmission according to a transmission condition based on a reservation settling request from the data transmission apparatus.

In order to solve the above-mentioned problems, a data transmission method according to the present invention, when transmitting data from a data transmission apparatus to a data reception apparatus via a communication line, comprises the steps of: sending transmission condition information from a data transmission apparatus to a data transmission management apparatus when data is transmitted from a data transmission apparatus to a data reception apparatus; creating a band management table describing band availability identification information based on relationship between a split band obtained by dividing a data communication band and a band transmission time interval for each split band via a communication line and resource management information indicating states of a data transmission apparatus and a data reception apparatus connected to said communication means; referencing said band management table and said resource management information based on a transmission condition request from a data transmission apparatus via a communication line, creating an alternative transmission condition indicative of a condition for allowing a data transmission apparatus to send data to a data reception apparatus, and transmitting alternative transmission condition information from a data transmission management apparatus to a data transmission apparatus; sending, from said data transmission apparatus to said data transmission management apparatus, information for reserving data transmission according to a transmission condition based on alternative transmission condition information sent from said data transmission management apparatus; and allowing said data transmission management apparatus to reserve data transmission according to a transmission condition based on a reservation settling request from said data transmission apparatus.

When a data transmission apparatus transmits data to a data reception apparatus via a communication line, a data transmission management apparatus and a method thereof according to the present invention can reference a band management table and resource management information based on a transmission condition request from the data transmission apparatus. The data transmission management apparatus and the method thereof can create an alternative transmission condition indicative of a condition which permits the data transmission apparatus to send data to the data reception apparatus. The data transmission management apparatus and the method thereof can send alternative transmission condition information to the data transmission apparatus. It is therefore possible to provide an alternative to the transmission condition during data transmission according to the transmission condition requested from the data transmission apparatus.

When a data transmission apparatus transmits data to a data reception apparatus via a communication line, a data transmission system and a data transmission method thereof according to the present invention can reference a band management table and resource management information based on a transmission condition request from the data transmission apparatus. The data transmission system and the data transmission method thereof can create an alternative transmission condition indicative of a condition which permits -the data transmission apparatus to send data to the data reception apparatus. A data transmission management apparatus transmits alternative transmission condition information to the data transmission apparatus. It is therefore possible to provide an alternative to the transmission condition during data transmission according to the transmission condition requested from the data transmission apparatus. Based on the alternative transmission condition information sent from the data transmission management apparatus, the data transmission apparatus can send information for reserving data transmission according to the transmission condition to the data transmission management apparatus. Based on the reservation settling information from the data transmission apparatus, the data transmission management apparatus can register data transmission according to the transmission condition.

### BRIEF DESCRIPTION OF THE SEVERAL VIEWS OF THE DRAWING

FIG. 1 is a block diagram showing configuration of a data transmission system according to the present invention;
FIG. 2 is a block diagram showing configuration of a data transmission apparatus and a data reception apparatus according to the present invention;
FIG. 3 shows a local resource management table maintained in the data transmission apparatus and the data reception apparatus according to the present invention;
FIG. 4 is a block diagram showing configuration of a reservation management apparatus according to the present invention;
FIG. 5 shows a backbone band management table maintained in the reservation management apparatus according to the present invention;
FIG. 6 shows a global resource management table maintained in the reservation management apparatus according to the present invention;
FIG. 7 shows a bit rate conversion table maintained in the reservation management apparatus according to the present invention;
FIG. 8 shows a reservation band charging table maintained in the reservation management apparatus according to the present invention;
FIG. 9 shows a file data charging table maintained in the reservation management apparatus according to the present invention;
FIG. 10 shows a GUI screen indicating resource operation states reported from a transmission control section and a reception control section in the data transmission apparatus according to the present invention;
FIG. 11 is a flowchart indicating processing steps when a data transmission apparatus sends a data stream to a data reception apparatus via a network in the data transmission system according to the present invention;
FIG. 12 shows a GUI screen displayed on a display section when the data transmission apparatus according to the present invention starts sending a data stream;
FIG. 13 shows how a GUI screen shows an example of an alternative to a transmission condition when the data transmission apparatus according to the present invention sends a data stream;
FIG. 14 shows how a GUI screen shows another example of an alternative to a transmission condition when the data transmission apparatus according to the present invention sends a data stream;
FIG. 15 is a flowchart indicating processing steps when a data transmission apparatus transfers file data to a data reception apparatus via a network by specifying a file and a transmission end time as a transmission condition request in the data transmission system according to the present invention;
FIG. 16 shows a GUI screen displayed on a display section when the data transmission apparatus according to the present invention starts sending file data;
FIG. 17 shows how a GUI screen shows an example of an alternative to a transmission condition when the data transmission apparatus according to the present invention sends file data;
FIG. 18 is a flowchart indicating processing steps when a data transmission apparatus transfers file data to a data reception apparatus via a network by specifying a file and a charging amount as a transmission condition request in the data transmission system according to the present invention;
FIG. 19 shows how a GUI screen shows another example of an alternative to a transmission condition when the data transmission apparatus according to the present invention sends file data;
FIG. 20 is a flowchart indicating processing steps when a data transmission apparatus transfers file data to a data reception apparatus via a network by specifying a file and a transmission start time as a transmission condition request in the data transmission system according to the present invention;
FIG. 21 shows how a GUI screen shows another example of an alternative to a transmission condition when the data transmission apparatus according to the present invention sends file data;
FIG. 22 is a flowchart indicating processing steps when a data transmission apparatus transfers file data to a data reception apparatus via a network by specifying a file and a transmission time interval as a transmission condition request in the data transmission system according to the present invention; and
FIG. 23 shows how a GUI screen shows another example of an alternative to a transmission condition when the data transmission apparatus according to the present invention sends file data.

### DETAILED DESCRIPTION OF THE INVENTION

Embodiments of the present invention will be described in further detail with reference to the accompanying drawings.

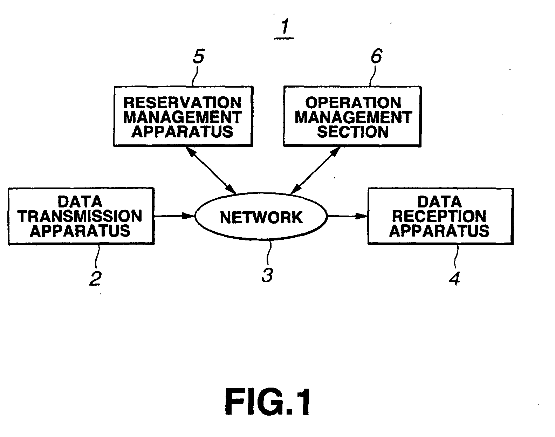

The present invention is applied to, say, a data transmission system 1 as shown in FIG. 1.

The data transmission system 1 comprises a data transmission apparatus 2, a data reception apparatus 4, a reservation management apparatus 5, and an operation management section 6. The data transmission apparatus 2 transmits data. The data reception apparatus 4 receives data from the data transmission apparatus 2 via a network 3. The reservation management apparatus 5 manages data transmission between the data transmission apparatus 2 and the data reception apparatus 4 via the network 3. The operation management section 6 processes charging for data transmission via the network.

In this data transmission system 1, the data transmission apparatus 2 and the data reception apparatus 4 are terminals connected to the network 3, and can be provided with data reception and transmission functions. However, the following describes an example of transmitting data from the data transmission apparatus 2 to the data reception apparatus 4.

The network 3 comprises a communication line network, say, a public switching network such as Internet and the like. The network 3 is allocated a reservation band, a best-effort band, and a signaling band. The reservation band transmits data according to a previous reservation (to be described later) across all network bands. The best-effort band transmits data on a best-effort basis. The signaling band performs signaling between devices connected to the network 3. The following embodiment explains a case where the best-effort band and the signaling band are fixed and the reservation band varies with reservation situations. It is to be distinctly understood that the present invention is applicable when the best-effort band varies with reservation situations of the reservation band.

The data transmission apparatus 2 stores data to be transmitted via the network 3 and transmits data to the data reception apparatus 4 under the control of the reservation management apparatus 5.

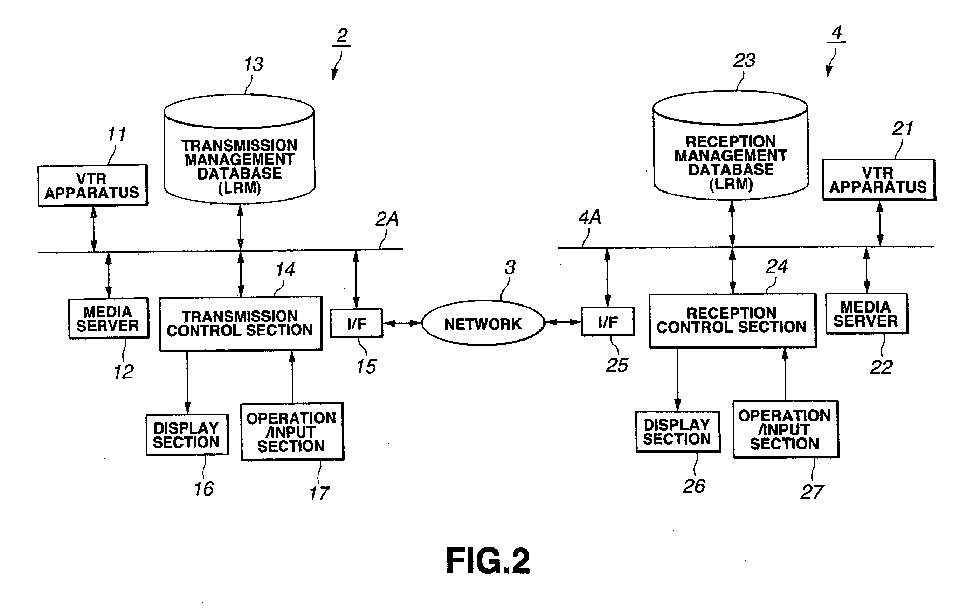

As shown in FIG. 2, the data transmission apparatus 2 comprises a VTR apparatus 11, a media server 12, a transmission-side management database 13, a transmission control section 14, and an I/F 15 which are all connected to a data bus 2A. In the data transmission apparatus 2, the transmission control section 14 connects with a display section 16 and an operation/input section 17.

The VTR apparatus 11 comprises a streamer having a mechanism for recording data on a tape storage medium. The VTR apparatus 11 reproduces chronological data streams such as video and music recorded on the tape storage medium for output to the I/F 15 and records these data streams according to a control signal from the transmission control section 14.

The VTR apparatus 11 encodes (compresses) or decodes (expands) data streams when they are recorded on the tape storage medium or are reproduced for transmission. The VTR apparatus 11 controls a data amount of data streams to be transmitted for controlling a bit rate by performing compression according to a control signal from the transmission control section 14.

Further, the VTR apparatus 11 has a function for editing recorded video or music data.

The media server 12 records data on, say, a disk storage medium and manages recorded data. The media server 12 reads file data in a file format, outputs this data to the I/F 15, and records the file data according to a control signal from the transmission control section 14.

The media server 12 encodes (compresses) or decodes (expands) file data to be recorded on the disk storage medium or to be output to the I/F 15 for transmission. The media server 12 controls a size of file data to be transmitted by performing compression according to a control signal from the transmission control section 14.

Further, the media server 12 has a function for editing file data representing still pictures and the like recorded on the disk storage medium.

The I/F 15 may encode (compress) or decode (expand) data streams and file data selected from the media server 12 and the VTR apparatus 11. The I/F 15 has a function for encoding (compressing) or decoding (expanding) data streams and file data received via the network 3 from a data bus 4A. At this time, the I/F 15 can change sizes of data streams and file data for transmission by performing compression according to a control signal from the transmission control section 14.

The transmission-side management database 13 identifies the VTR apparatus 11 and the media server 12 as resources. By doing so, the transmission-side management database 13 maintains a local resource management table which describes information for managing each resource. According to a control signal from the transmission-control section 14, the transmission-side management database 13 retrieves information from the local resource management table and outputs it to the transmission control section 14. The transmission-side management database 13 also updates the local resource management table content according to a control signal from the transmission control section 14 for updating this table.

The I/F 15 is connected to the network 3 and transmits data streams or file data according to a control signal from the transmission control section 14. The I/F 15 also outputs information from the reservation management apparatus 5 to the transmission control section 14. In response to the network 3, the I/F 15 generates a packet using a data stream or file data and outputs it to the data reception apparatus 4. The I/F 15 also analyzes a packet from the reservation management apparatus 5 and outputs it to the transmission control section 14.

The display section 16 comprises a display unit and displays data based on a signal input from the transmission control section 14. The display section 16 provides a user with information by displaying various contents.

The operation/input section 17 comprises, say, a keyboard, a mouse, and the like, and generates an operation/input signal in response to a user's operation. The operation/input section 17 outputs operation/input signals to the transmission control section 14.

The transmission control section 14 functions as an LRM (Local Resource Manager) for identifying, managing, and controlling each section included in the data transmission apparatus 2 as a resource. The transmission control section 14 creates and updates a local resource management table stored in the transmission-side management database 13 by identifying the VTR apparatus 11 and the media server 12 as resources and monitoring resource states.

The transmission control section 14 maintains a program for implementing a GUI and displays a GUI screen on the display section 16 for generating transmission condition request information. The transmission control section 14 generates transmission condition request information and transmits this information to the reservation management apparatus 5 via the I/F 15 according to an operation/input signal indicating the transmission condition request for displaying the GUI screen.

When alternative output information is input from the reservation management apparatus 5 via the I/F 15 in response to the transmission condition request, the transmission control section 14 displays the corresponding GUI screen on the display section 16.

When transmitting data streams, the transmission control section 14 issues the following transmission condition requests. A transmission band request specifies a network band used for data stream transmission. A transmission time zone request specifies times to start and end data transmission using the network 3. A transmission time request specifies a data stream transmission time.

The following transmission condition requests are used for file data transmission. A file size request specifies a file size. An available band request specifies whether to use the best-effort band or the reservation band. An end time request specifies time to end the file data transmission. A charging amount request specifies a charging amount for data transmission. A transmission time zone request specifies times to start and end data transmission. A transmission end time request requests time to start the data transmission.

The transmission control section 14 transmits these transmission condition requests to the reservation management apparatus 5 via the I/F 15. When a transmission condition is settled and is reserved in the reservation management apparatus 5, the transmission control section 14 updates the local resource management table based on the reserved content.

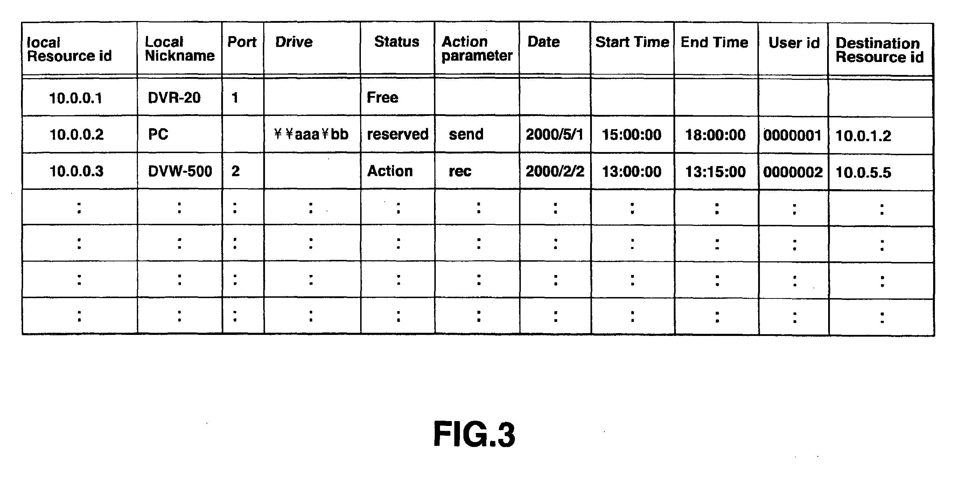

FIG. 3 shows the local resource management table. This table comprises Local Resource id, Local Nickname, Port, Drive, Status, Action parameter, Date, Start Time, End Time, User id, and Destination Resource id. The Local Resource id information identifies the VTR apparatus 11 and the media server 12 as resources controlled by the transmission control section 14. The Local Nickname information indicates each resource nickname. The Port information indicates each port number. The Drive information indicates a data storage address of each resource. The Status information indicates each resource state. The Action parameter information indicates an action content corresponding to status information about each resource. The Date information specifies a date to execute an operation indicated by the Action parameter in the year/month/day format. The Start Time information indicates time to start an operation indicated by the Action parameter. The End Time information indicates time to terminate an operation indicated by the Action parameter. The User id information indicates a user ID for each resource. The Destination Resource id information indicates a destination resource to which data is to be sent.

The transmission control section 14 provides control to transmit each resource information maintained in the local resource management table to the reservation management apparatus 5 via the I/F 15. When a transmission condition is settled and is reserved in the reservation management apparatus 5, the transmission control section 14 stores each of the above-mentioned information in the local resource management table.

As shown in FIG. 2, the data reception apparatus 4 comprises a VTR apparatus 21, a media server 22, a reception-side management database 23, a reception control section 24, and an I/F 25 which are all connected to a data bus 4A. In the data reception apparatus 4, the reception control section 24 connects with a display section 26 and an operation/input section 27.

The VTR apparatus 21 comprises a streamer having a mechanism for recording data on a tape storage medium. The VTR apparatus 21 reproduces chronological data streams such as video and music recorded on the tape storage medium for output to the I/F 25 and records these data streams received via the I/F 25.

The VTR apparatus 21 compresses or received expands data streams when they are recorded on the tape storage medium or are output to the I/F 25. The VTR apparatus 21 restores the compression data received from the I/F 25 by expanding it according to a control signal from the reception control section 24.

Further, the VTR apparatus 21 has a function for editing received video or music data.

The media server 22 records data on, say, a disk storage medium and manages recorded data. The media server 22 reads file data in a file format, outputs this data to the I/F 25, and records the file data according to a control signal from the reception control section 24.

The media server 22 compresses or expands file data to be received and recorded on the disk storage medium or to be output to the I/F 25 for transmission. The media server 22 receives the file data compressed in the I/F 25 by performing expansion according to a control signal from the transmission control section 14.

Further, the media server 22 has a function for editing file data representing still pictures and the like received and recorded on the disk storage medium.

The reception-side management database 23 identifies the VTR apparatus 21 and the media server 22 as resources. By doing so, the reception-side management database 23 maintains a local resource management table which describes information for managing each resource.

The local resource management table stored in the reception-side management database 23 stores the same contents as those of the local resource management table maintained in the data transmission apparatus 2. According to a control signal from the reception control section 24, the reception-side management database 23 retrieves information from the local resource management table and outputs it to the reception control section 24. The reception-side management database 23 also updates the local resource management table content according to a control signal from the reception control section 24 for updating this table.

The I/F 25 is connected to the network 3 and receives data streams or file data according to a control signal from the reception control section 24. The I/F 25 also outputs information from the reservation management apparatus 5 to the reception control section 24. In response to the network 3, the I/F 25 generates a packet using a data stream or file data and The I/F 25 also disassembles a packet from the reservation management apparatus 5 and outputs it to the reception control section 24.

The display section 26 comprises a display unit and displays data based on a signal input from the reception control section 24. The display section 26 provides a user with information by displaying various contents.

The operation/input section 27 comprises, say, a keyboard, a mouse, and the like, and generates an operation/input signal in response to a user's operation. The operation/input section 27 outputs operation/input signals to the reception control section 24.

The reception control section 24 functions as an LRM (Local Resource Manager) for controlling each section included in the data reception apparatus 4. The reception control section 24 creates and updates a local resource management table stored in itself by identifying the VTR apparatus 21 and the media server 22 as resources and monitoring resource states. The reception control section 24 provides control to transmit each resource information maintained in the local resource management table to the reservation management apparatus 5 via the I/F 25. When a transmission condition is settled and is reserved in the reservation management apparatus 5, the reception control section 24 stores reception-side resource contents in the local resource management table.

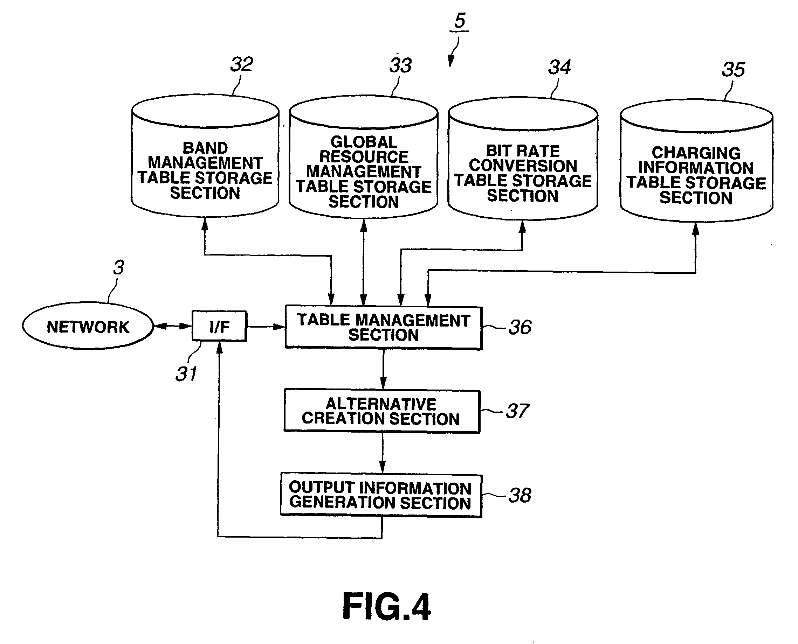

The following describes the configuration of the reservation management apparatus 5 functioning as an MRM (Main Resource Manager) for the data transmission system 1 with reference to FIG. 4.

The reservation management apparatus 5 is provided with an I/F 31 connected to the network 3. According to a transmission condition request from the data transmission apparatus 2, the reservation management apparatus 5 references tables stored in a band management table storage section 32, a global resource management table storage section 33, a bit rate conversion table storage section 34, and a charging information table storage section 35. The reservation management apparatus 5 uses a table management section 36, an alternative creation section 37, and an output information generation section 38 to perform processing according to a transmission condition request from the data transmission apparatus 2.

The I/F 31 is connected to the network 3 for exchanging information with the data transmission apparatus 2 and the data reception apparatus 4. The I/F 31 outputs information from the data transmission apparatus 2 to the table management section 36. In addition, the I/F 31 transmits information from the output information generation section 38 to the data transmission apparatus 2 and the data reception apparatus 4 via the network 3.

The table management section 36 reads information from the tables stored in the band management table storage section 32, the global resource management table storage section 33, the bit rate conversion table storage section 34, and the charging information table storage section 35. The table management section 36 compares the read information with transmission condition information transmitted from the data transmission apparatus 2 via the I/F 31. Based on a comparison result, the table management section 36 reads information from each table and outputs the read information to the alternative creation section 37.

When the data transmission apparatus 2 settles a transmission condition to be sent for reservation, the table management section 36 obtains necessary information via the network 3 and the I/F 31. The table management section 36 rewrites the contents of the tables stored in the band management table storage section 32 and the global resource management table storage section 33.

Based on information from the table management section 36, the alternative creation section 37 creates alternative transmission condition information for the transmission condition information. The alternative creation section 37 outputs the created transmission condition information to the output information generation section 38. The alternative creation section 37 creates an alternative most approximate to the transmission condition information by choosing from information issued from the alternative creation section 37. At this time, the alternative to be created should be an item which is same as that requested as the transmission condition and has a transmission condition most approximate to the transmission condition request.

The output information generation section 38 creates alternative output information based on alternative transmission condition information from the output information generation section 38. This information is used for the data transmission apparatus 2 to provide an alternative to the transmission condition information. The output information generation section 38 creates alternative output information according to the GUI maintained in the data transmission apparatus 2. According to the alternative, the output information generation section 38 creates alternative output information indicating a transmission date, a day of the week, a transmission start time, a transmission end time, a transmission band, and a charging amount needed for data transmission.

The band management table storage section 32 recognizes a usage situation of the reservation band out of all bands in the network 3 to maintain a backbone band management table which describes information for managing the reservation band. According to a control signal from the table management section 36, the band management table storage section 32 retrieves information from the backbone band management table and outputs a result to the table management section 36.

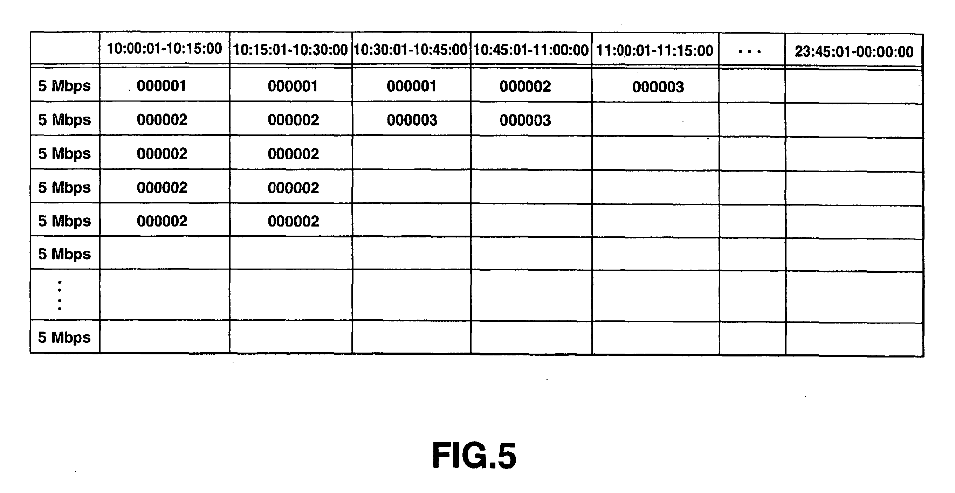

As shown in FIG. 5, the backbone band management table maintained in the band management table storage section 32 comprises a reservation band divided into given split bands. Each split band is further divided into active time zones at a specified time interval. In this backbone band management table, a user ID is written according to relation between each split band and active time zone for managing reservation of available bands in each active time zone. The backbone band management table divides the reservation band into, say, 5-Mbps split bands. The active time zone is divided every 15 minutes. The split band and the active time zone determine a reservation area. These areas store user IDs expressed with "00001" through "00003" for reservation. FIG. 5 shows that the backbone band management table reserves resources with user ID 00001 in 5-Mbps bands between 10:00:01 and 10:45:00 according to the hour:minute:second format.

The band management table storage section 32 references the backbone band management table based on information indicating an available band or an active time zone/transmission time interval from the table management section 36. When any reservation is registered, the band management table storage section 32 determines the band is unavailable. When no reservation is registered, the band management table storage section 32 determines the band is available.

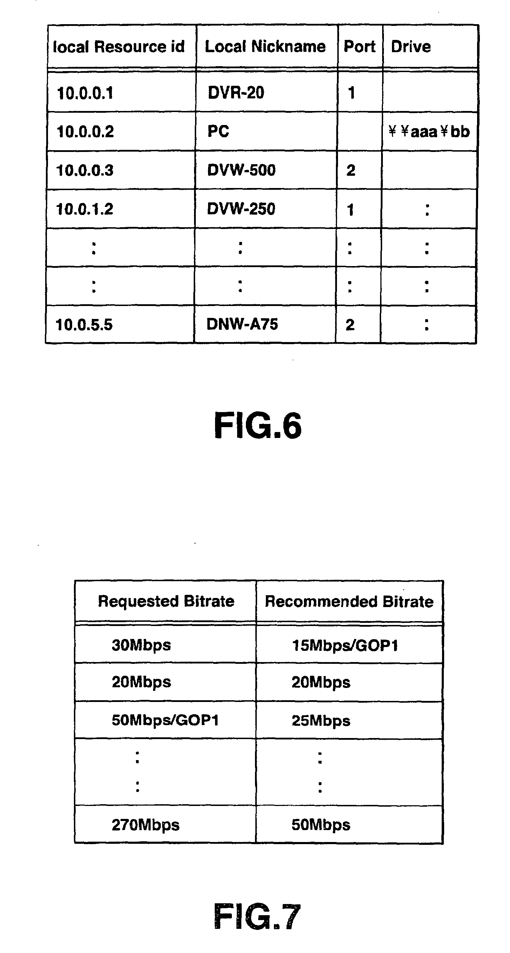

The global resource management table storage section 33 maintains a global resource management table for identifying resources connected to the reservation management apparatus 5 via the network 3. As shown in FIG. 6, the global resource management table comprises Local Resource id, Local Nickname, Port, and Drive. The Local Resource id information indicates resources identified by the data transmission apparatus 2 and the data reception apparatus 4. The Local Nickname information indicates each resource nickname. The Port information indicates each port number. The Drive information indicates a data storage address of each resource. When information about devices newly identified as resources is input from the data transmission apparatus 2 and the data reception apparatus 4 via the I/F 31, the global resource management table storage section 33 creates or updates the global resource management table.

The global resource management table storage section 33 references the global resource management table based on the information indicating a data transmission destination resource for reading this information.

The bit rate conversion table storage section 34 maintains a bit rate conversion table. This table is used for providing an alternative by decreasing a bit rate when no band can be reserved under a transmission condition requested from the data transmission apparatus 2. As shown in FIG. 7, the bit rate conversion table shows relationship between Requested Bitrate and Recommended Bitrate. The Requested Bitrate information is transmitted as a transmission condition request. The Recommended Bitrate is proposed with respect to the Requested Bitrate.

The bit rate conversion table storage section 34 reads a recommended bit rate from the bit rate conversion table based on information indicating the bit rate requested during data transmission from the table management section 36.

The charging information table storage section 35 maintains a reservation band charging table and a file data charging table. The reservation band charging table is referenced when the data transmission apparatus 2 transmits data to the data reception apparatus 4 using a reservation band. The file data charging table is referenced when file data is transmitted. These charging tables maintained in the charging information table storage section 35 are provided from the operation management section 6 to be described later.

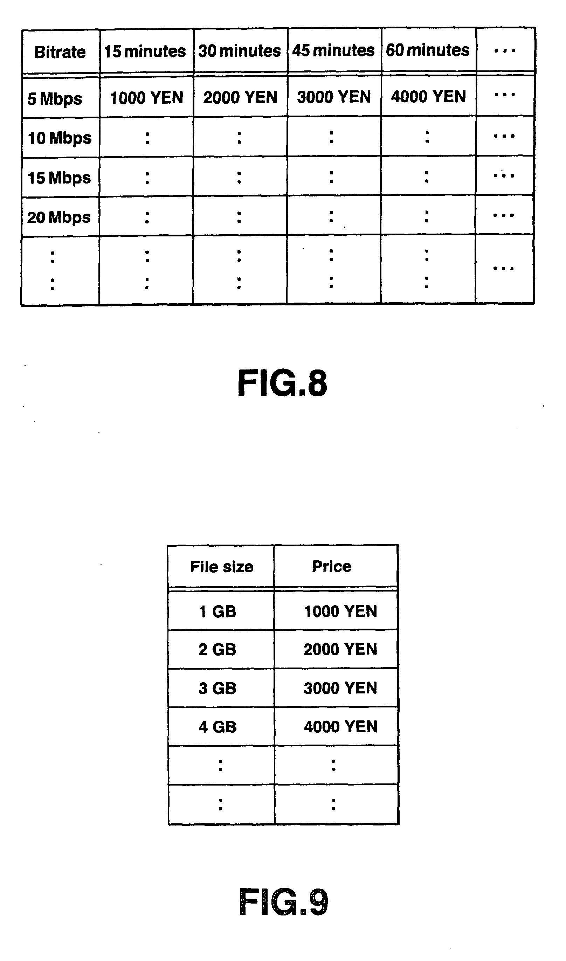

As shown in FIG. 8, the reservation band charging table maintained in the charging information table storage section 35 shows a charging amount determined by the relationship between a reserved band amount for the network band and a transmission time interval. In this reservation band charging table, a split band in the backbone band management table determines the reserved band amount and a active time zone therein determines the transmission time interval. As shown in FIG. 9, the file data charging table shows a charging amount determined by the file size.

Based on information indicating the reserved band amount and the transmission time interval from the table management section 36, the charging information table storage section 35 references the reservation band charging table to read charging amount information indicating a charging amount. Further, the charging information table storage section 35 references the file data charging table to read charging amount information indicating a charging amount based on a file size of file data transmitted from the data transmission apparatus 2.

The operation management section 6 maintains the reservation band charging table and the file data charging table as shown in FIGS. 8 and 9. The operation management section 6 receives the charging amount information for each user from the reservation management apparatus 5 and maintains a charging information database storing respective users' charging amount information.

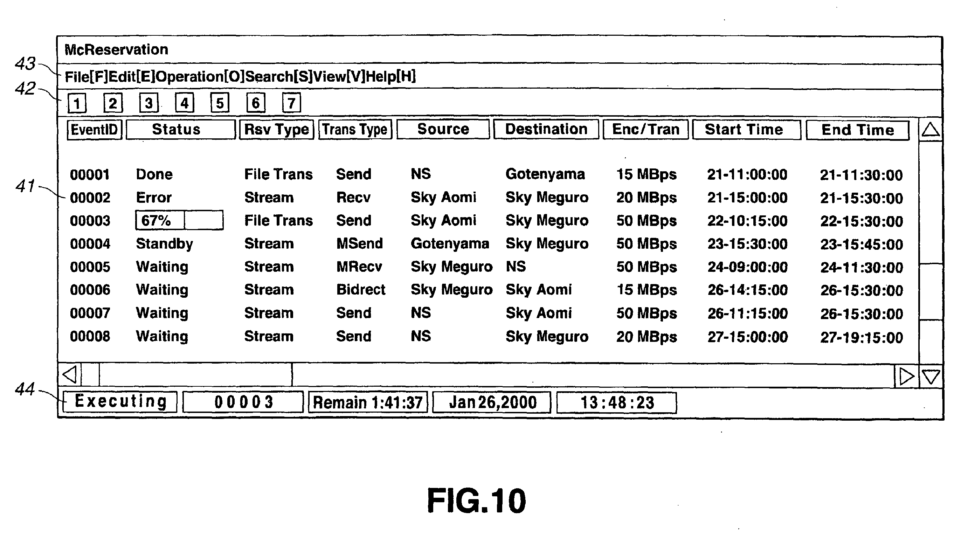

The operation management section 6 creates and maintains a user information database by receiving already registered user information from the reservation management apparatus 5 via the network 3. In this data transmission system 1, the transmission control section 14 and the reception control section 24 recognizes the VTR apparatuses 11 and 21 and the media servers 12 and 22 as resources for managing operation states. The transmission control section 14 and the reception control section 24 detect operation states of respective resources and display a GUI screen as shown in FIG. 10 on the display section 16 and 26.

As shown in FIG. 10, the transmission control section 14 and the reception control section 24 display an event list 41, a toolbar 42, and a menu bar 43. The event list 41 lists operational contents of the resources included in the data transmission apparatus 2 and the data reception apparatus 4. These sections control respective event contents according to operation/input signals generated when a user chooses processing items from the toolbar 42 and the menu bar 43. The transmission control section 14 and the reception control section 24 provide a user with the current processing state by displaying the status bar 44 indicating a state of the currently executing event ID. The transmission control section 14 provides the following information. Event ID indicates each event ID. Status indicates each event state. Rsv Type indicates a data type handled by each event. Trans Type is transmission type information indicating each event processing content. Source indicates a data-transmitting resource. Destination indicates a data-receiving resource. Enc/Tran indicates a transmission bit rate. Start Time indicates the time to start each event. End Time indicates the time to end each event. Using these information items, the transmission control section 14 and the reception control section 24 provide a user with each event content.

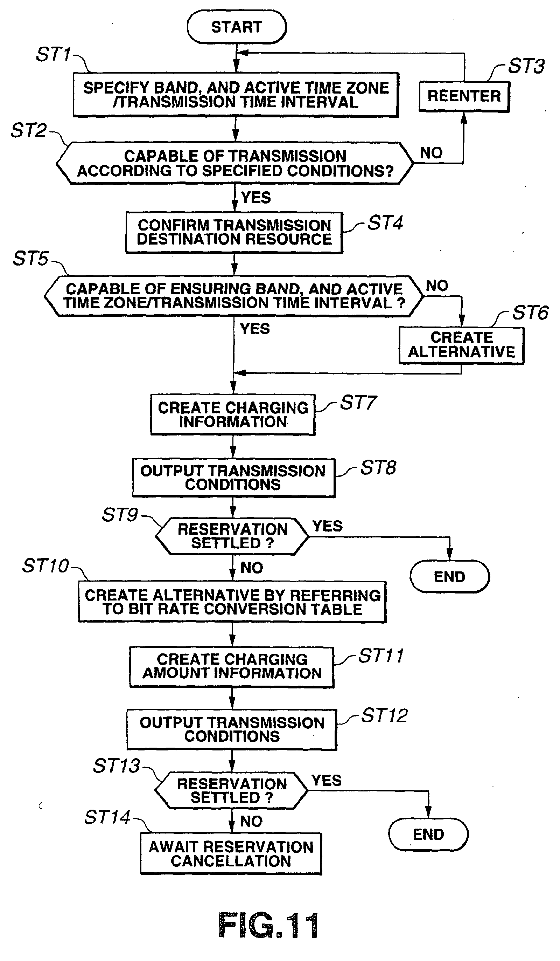

With reference to FIG. 11, the following describes how the data transmission apparatus 2 transmits a data stream to the data reception apparatus 4 via the network 3 in the thus configured data transmission system 1.

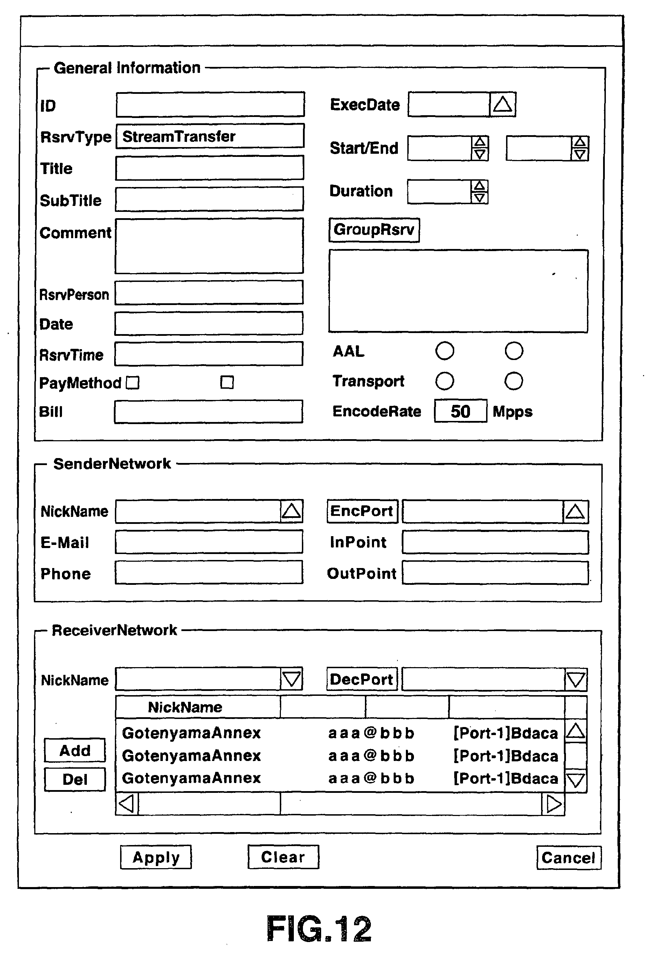

In FIG. 11, a user operates the operation/input section 17 to start transmitting a data stream at step ST1. At this time, the transmission control section 14 displays a GUI screen as shown in FIG. 12 on the display section 16.

According to FIG. 12, when an operation/input signal is input to indicate that data to be transmitted is a data stream, the transmission control section 14 requests to enter various transmission conditions specifiable during data stream transmission.

According to FIG. 12, the transmission control section 14 displays general information (General Information) during data stream transmission, comprising data stream (Rsrv Type, Stream Transfer) as the data type for band reservation, the reserved user name, the reserved date, and the reserved time. The transmission control section 14 provides user-specifiable items such as user ID, title (Title) for a data, a sub-title (Sub Title), comment (Comment), a charge-paying side (Pay Method), a charge amount (Bill), a transmission date (Exec Date), a transmission start time (Start), a transmission termination time (End), a continued transmission time (Duration), ATM-compliant AAL, and encode rate (Encode Rate).

The transmission control section 14 allows a user to specify resource information (SenderNetwork) about the data transmission apparatus 2 such as nick name (Nick Name) for a resource and the port number (Enc Port) of a resource to be encoded. Namely, this port number indicates a resource to which the data stream is to be transmitted. Further, the transmission control section 14 allows a user to specify resource information (ReceiverNetwork) about the data-receiving resource such as nick name (Nick Name) and the port number (Dec Port) of a resource to be decoded. Namely, this port number indicates a resource which stores a received data stream.

With this GUI screen displayed, the user operates the operation/input section 17 to input -an operation/input signal to the transmission control section 14. This operation/input signal specifies reservation conditions indicating a reservation band and an active time zone/transmission time interval the user needs. The transmission control section 14 generates transmission condition request information according to the operation/input signal (step ST1).

At the next step ST2, the transmission control section 14 outputs the transmission condition request information to the transmission-side management database 13. The transmission control section 14 checks if the VTR apparatus 11 is operable according to the band and the active time zone/transmission time interval specified at step ST1. When there is already provided another reservation with the specified active time zone/transmission time interval, the transmission-side management database 13 notifies the transmission control section 14 whether transmission is feasible. When the transmission is possible, the transmission control section 14 sends the transmission condition request information to the reservation management apparatus 5 via the network 3 and proceeds to step ST4. When the transmission is impossible, control advances to step ST3.

At the next step ST3, the transmission control section 14 prompts the user to reenter a condition by displaying the screen for re-specifying transmission conditions on the display section 16, and then returns to step ST1.

At step ST4, the table management section 36 in the reservation management apparatus 5 references the global resource management table - based on the transmission destination information issued from the data transmission apparatus 2 to confirm a transmission destination resource which should receive data.

At the next step ST5, the table management section 36 references the backbone band management table based on the transmission condition request information. By dosing so, the table management section 36 determines whether the reservation can be secured according to the transmission condition (reservation band and active time zone/transmission time interval). When determining that the reservation cannot be secured, the table management section 36 advances to step ST6. When determining that the reservation can be secured, the table management section 36 advances to step ST7.

At step ST6, the table management section 36 and the alternative creation section 37 create an alternative by retrieving the most approximate active time zone from among items specified by the transmission condition, and then proceeds to step ST7.

At step ST7, the table management section 36 reads the reservation band charging table stored in the charging information table storage section 35. The table management section 36 creates charging amount information by referencing the reservation band charging table based on the transmission condition at step ST5 or ST6 or the reservation band and the active time zone/transmission time interval specified in the alternative.

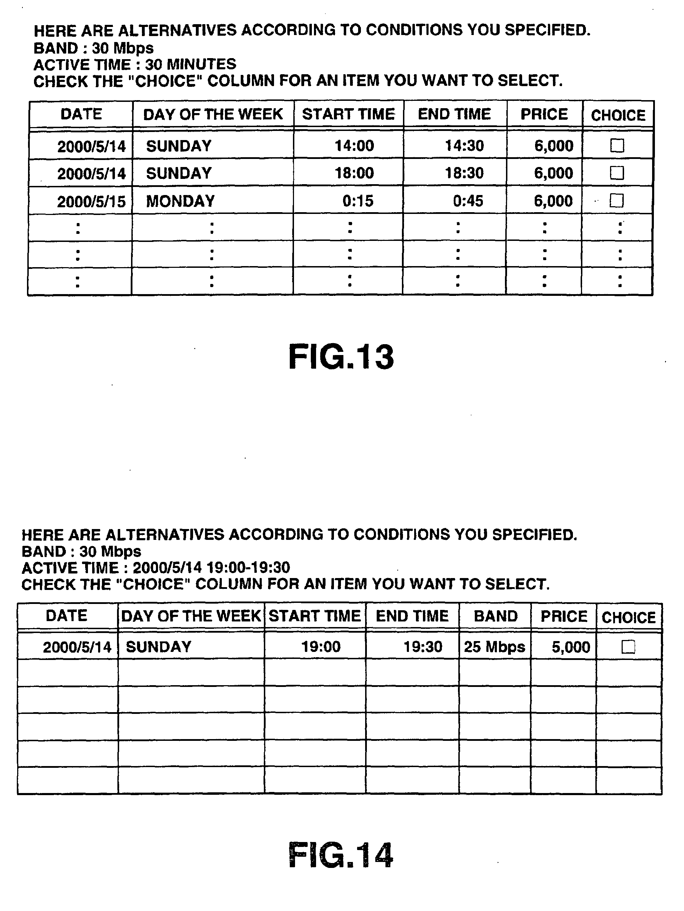

At the next step ST8, the reservation management apparatus 5 creates charging amount information according to the transmission condition or an alternative including the charging amount information. The reservation management apparatus 5 uses the alternative transmission condition information generation section 38 to create alternative transmission condition information provided to the data reception apparatus 4. The reservation management apparatus 5 sends the alternative transmission condition information to the transmission control section 14 of the data reception apparatus 4 via the network 3. The transmission control section 14 displays charging amount information according to the transmission condition sent from the reservation management apparatus 5 or an alternative on the display section 16. For example, alternatives as shown in FIG. 13 are presented to the user.

At the next step ST9, the user operates the operation/input section 17 to select an alternative. When the reservation is determined to be settled, the transmission control section 14 issues this information to the reservation management apparatus 5, registers the reservation to the backbone band management table, and then terminates the processing. When the reservation is determined not to be settled, the transmission control section 14 issues this information to the reservation management apparatus 5, and then proceeds to step ST10.

At the next step ST10, the table management section 36 in the reservation management apparatus 5 converts a bit rate. At this time, the table management section 36 references the bit rate conversion table maintained in the bit rate conversion table storage section 34 according to the requested bit rate. The converted bit rate is output to the alternative creation section 37. The alternative creation section 37 creates an alternative based on the converted bit rate.

At the next step ST11, the table management section 36 references the bit rate conversion table based on the converted bit rate and generates charging amount information. The alternative transmission condition information generation section 38 creates alternative transmission condition information indicating an alternative including charging amount information, and sends this information to the transmission control section 14 of the reservation management apparatus 5.

At the next step ST12, the transmission control section 14 displays an alternative as shown in FIG. 14. The example in FIG. 14 shows that the transmission request for a band is decreased from 30 Mbps to 25 Mbps.

At the next step ST13, the transmission control section 14 provides the user with an alternative after the bit rate conversion by displaying its content on the display section 16. When the reservation is determined to be settled according to user's action on the operation/input section 17, the transmission control section 14 terminates the processing. When the reservation is determined not to be settled, the transmission control section 14 shows that it awaits reservation cancellation based on the transmission condition (Step ST14).

During a reservation cancellation wait state at step ST14, the transmission control section 14 notifies the user of this state. To do this, the transmission control section 14 displays the corresponding information on the display section 16 based on the information from the reservation management apparatus 5 indicating that reservation cancellation occurred.

Also during the reservation cancellation wait state at step ST14, the user may prompt to determine whether to await reservation cancellation for the data transmission and may terminate the processing when not awaiting the reservation cancellation.

Further, during this reservation cancellation wait state, the reservation management apparatus 5 may prompt the reservation by sending an occurrence of the reservation cancellation wait state to the transmission control section 14 via a mobile communication network. For this purpose, it is possible to use, say, electronic mail or a data communication service and voice notification of a mobile telephone.

Further, in this data transmission system 1, the data reception apparatus 4 may provide band reservation or usage situation when logging on to the reservation management apparatus 5.

The data transmission system 1 which provides the above-mentioned processing displays a GUI screen as shown in FIG. 12 when the data transmission apparatus 2 sends a data stream to the data reception apparatus 4 via the network 3. Even if data transmission is unavailable under the condition of the user-specified transmission time zone, time interval, and band, it is possible to create the most approximate alternative and display it on the display section 16 for the user to know it. For this purpose, the reservation management apparatus 5 references the backbone band management table based on the transmission condition request. Accordingly, the data transmission system 1 can improve convenience of reservation for creating an alternative according to the user-specified transmission condition and transmitting data streams.

Moreover, the data transmission system 1 can create a new alternative by referencing the bit rate conversion table even if no reservation is settled after presentation of an alternative created with reference to the backbone band management table. This further improves convenience of reservation for transmitting data streams.

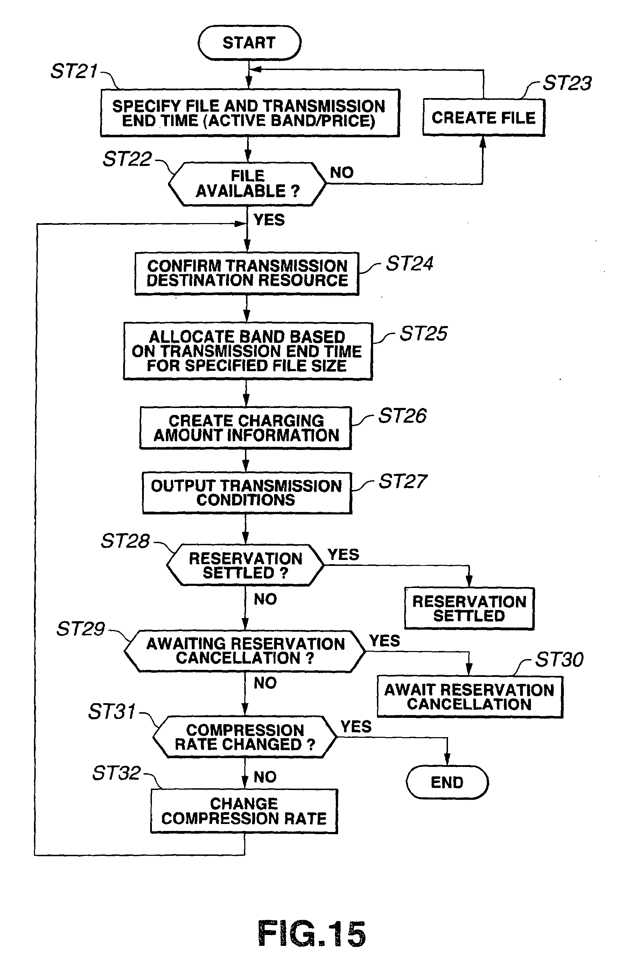

Then, with reference to FIG. 15, the following describes how the data transmission apparatus 2 transfers file data to the data reception apparatus 4 via the network 3 in the data transmission system 1.

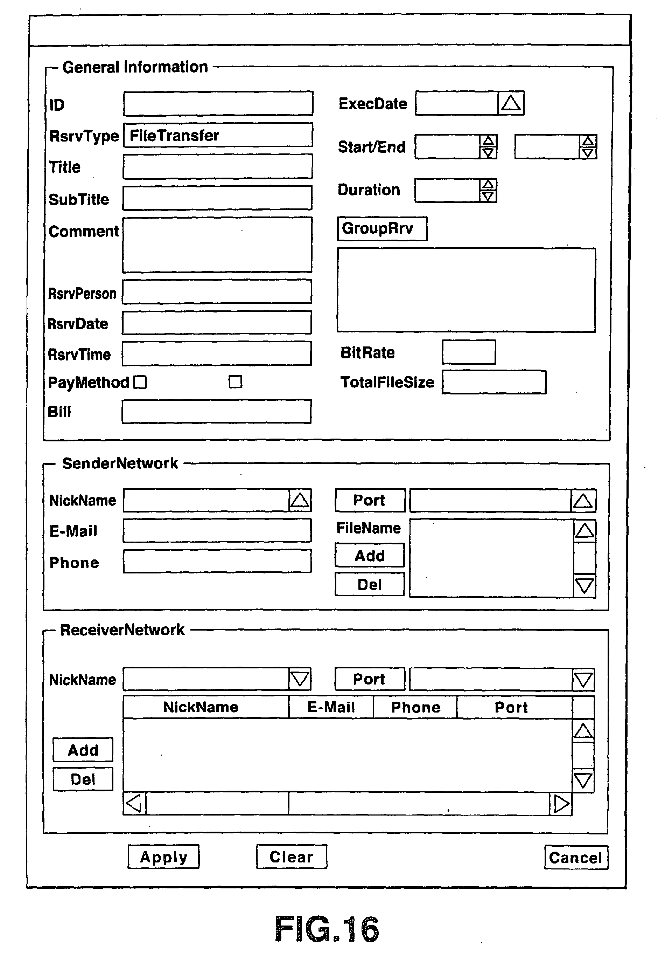

First, at step ST21 in FIG. 15, a user operates the operation/input section 17 to start file data transfer. At this time, the transmission control section 14 displays a GUI screen as shown in FIG. 16 on the display section 16.

According to FIG. 16, the transmission control section 14 requests to enter specifiable information during data stream transmission when an operation/input signal is input to show that data to be sent is a data stream.
[0097]

According to FIG. 16, the transmission control section 14 displays general information (General Information) during data stream transmission, comprising file data (Rsrv Type, File Transfer) as the data type for band reservation, the reserved user name, the reserved date, and the reserved time. The transmission control section 14 provides user-specifiable items such as user ID, a data tile (Title), a sub-title (Sub Title), comment (Comment), a charge-paying side (Pay Method), a charge amount (Bill), a transmission date (Exec Date), a transmission start time (Start), a transmission termination time (End), a continued transmission time (Duration), bit rate (Bit Rate), and a data file size (Total File Size).

The transmission control section 14 allows a user to specify resource (Sender Network) information about a file data transmission side such as nick name (Nick Name) for a resource and the port number (Enc Port) of a resource to be encoded. Namely, this port number indicates a resource to which file data is to be transmitted. Further, the transmission control section 14 allows a user to specify resource information (ReceiverNetwork) about the file data receiving resource such as nick name (Nick Name) and the port number (Dec Port) of a resource to be decoded. Namely, this port number indicates a resource which stores received file data.

With this GUI screen displayed, the user operates the operation/input section 17 to input an operation/input signal to the transmission control section 14. This operation/input signal specifies reservation conditions indicating the file and the transfer termination time. The transmission control section 14 generates transmission condition request information according to the operation/input signal (step ST21).

At the next step ST22, the transmission control section 14 checks if the file specified at step ST21 is available. The transmission control section 14 searches for file data stored in the media server 12. When the specified file data is determined to be available, control advances to step ST24. When the specified file data is determined to be unavailable, control advances to step ST23.

At the next step ST23, the transmission control section 14 provides control to issue an instruction for creating a file to the media server 12, and then returns to step ST21.

At step ST24, the table management section 36 in the reservation management apparatus 5 confirms a transmission destination resource which should receive file data. For this purpose, the table management section 36 references the global resource management table based on transmission destination information sent from the data transmission apparatus 2.

At the next step ST25, the table management section 36 retrieves a time zone capable of transmission and settles the reservation according to the transmission condition (file size and transmission end time). For this purpose, the table management section 36 references the backbone band management table based on the transmission condition request information.

At step ST26, the table management section 36 reads the file data charging table stored in the charging information table storage section 35. The table management section 36 creates charging amount information by referencing the file data charging table based on the file size in the transmission condition settled in step ST25.

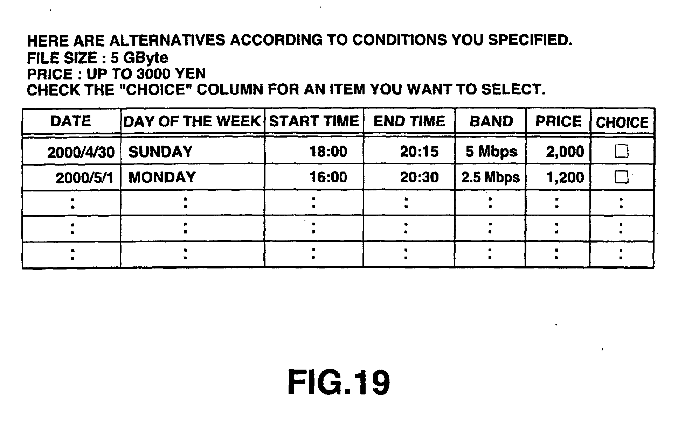

At the next step ST27, the reservation management apparatus 5 uses the output information generation section 38 to create alternative transmission condition information to be presented to the data transmission apparatus 2. The reservation management apparatus 5 sends the alternative transmission condition information to the transmission control section 14 via the network 3. The transmission control section 14 displays the charging amount information in the transmission condition on the display section 16. This information is sent from the reservation management apparatus 5. As a result, for example, alternatives as shown in FIG. 19 are presented to the user.

At the next step ST28, the user operates the operation/input section 17 to select an alternative. When the reservation is determined to be settled, the transmission control section 14 terminates the processing. When the reservation is determined not to be settled, the transmission control section 14 displays selections for determining whether to await reservation cancellation (step ST29). When an operation/input signal is input to enable the reservation cancellation wait, the transmission control section 14 advances to step ST30 to await the reservation cancellation. When an operation/input signal is input to disable the reservation cancellation wait, the transmission control section 14 advances to step ST31.

At step ST31, the transmission control section 14 shows a prompt as to whether to convert the compression rate for file data. When an operation/input signal is input to convert the compression rate, the transmission control section 14 advances to step ST32. When an operation/input signal is input not to convert the compression rate, the transmission control section 14 terminates the processing.

At step ST32, the transmission control section 14 generates a control signal for compressing a file specified in the media server 12 to decrease the file size, and then returns to step ST24 to repeat the above-mentioned processing.

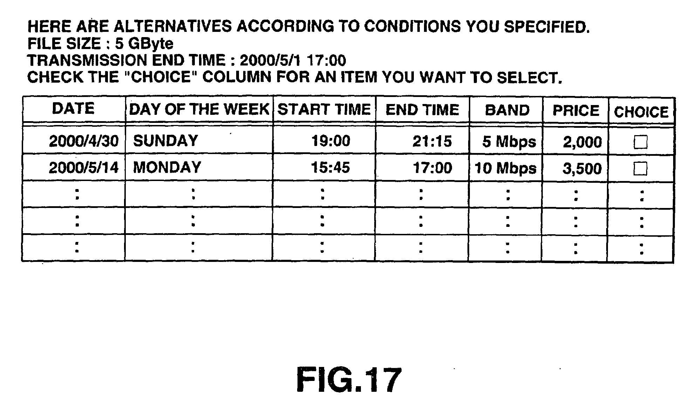

The data transmission system 1 which performs the above-mentioned processing displays a GUI screen as shown in FIG. 16 when the system sends file data to the data reception apparatus 4 from the data transmission apparatus 2 via the network 3. Even if no file transfer is available according to the user-specified file size and transmission end time, the system can create the most approximate alternative and display it on the display section 16 as shown in FIG. 17 for notifying the user of it. For this purpose, the reservation management apparatus 5 references the backbone band management table based on a transmission condition request. Accordingly, the data transmission system 1 can create an alternative according to the user-specified transmission condition and improve convenience for reserving file transmission.

Moreover, the data transmission system 1 can change a compression rate and create a new alternative by re-referencing the backbone band management table even if no reservation is settled after presentation of an alternative created with reference to the backbone band management table. This further improves convenience of reservation for file transfer.

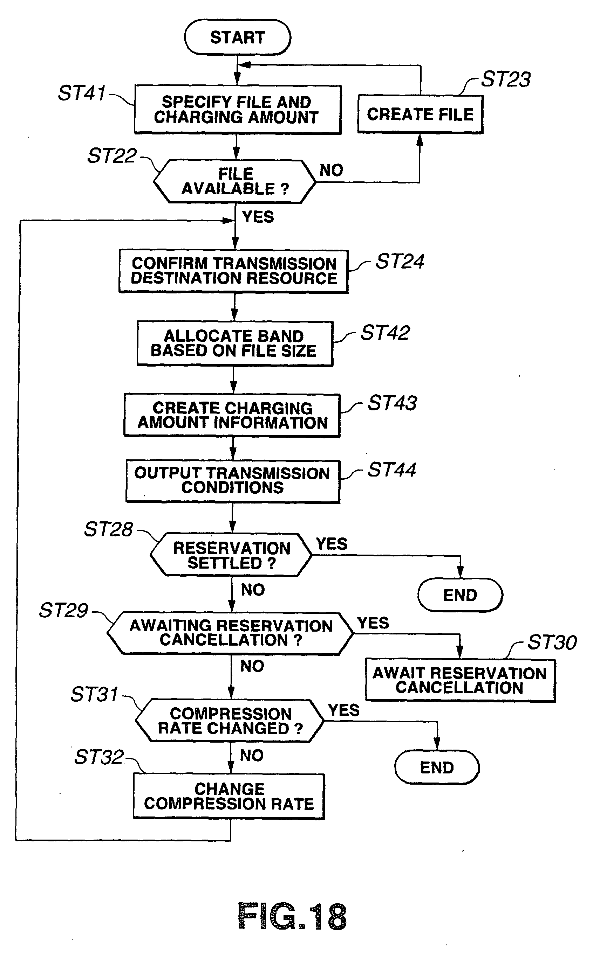

The following describes other processing steps when the data transmission apparatus 2 transfers file data to the data reception apparatus 4 via the network 3 in the data transmission system 1 with reference to FIG. 18. The following omits detailed description about the same processing as that described with reference to the flowchart in FIG. 15 by using the same step number as used in this flowchart.

With the GUI screen displayed, a user operates the operation/input section 17 to issue an operation/input signal which specifies the reservation condition indicating a file and a charging amount. This signal is input to the transmission control section 14. According to the operation/input signal, the transmission control section 14 generates transmission condition request information (step ST41).

At the next step ST22, the transmission control section 14 checks if the file specified at step ST41 is available. When the corresponding file data is available, control advances to step ST24. When such file data is unavailable, control advances to step ST23.

At the next step ST23, the transmission control section 14 controls so that an instruction to create a file is output to the media server 12, and then returns to step ST41.

At step ST24, the table management section 36 in the reservation management apparatus 5 confirms a transmission destination resource which should receive data. For this purpose, the table management section 36 references the global resource management table based on the transmission destination information sent from the data transmission apparatus 2.

At the next step ST42, the table management section 36 retrieves a time zone capable of transmission and settles the reservation according to the transmission condition (file size). For this purpose, the table management section 36 references the backbone band management table based on the transmission condition request information.

At step ST43, the table management section 36 reads the file data charging table stored in the charging information table storage section 35. Based on the file size in the transmission condition settled in step ST42, the table management section 36 references the charging amount specified as transmission condition request information and the file data charging table to create charging information. When the specified charging amount is unavailable at this time, the table management section 36 retrieves charging information which indicates the most approximate charging amount.

At the next step ST44, the reservation management apparatus 5 uses the output information generation section 38 to create alternative transmission condition information to be presented to the data transmission apparatus 2. The reservation management apparatus 5 sends the alternative transmission condition information to the transmission control section 14 via the network 3. The transmission control section 14 displays the charging amount information in the transmission condition on the display section 16. This information is sent from the reservation management apparatus 5. As a result, for example, alternatives as shown in FIG. 17 are presented to the user.

When the reservation is determined to be settled at the next step ST28, the transmission control section 14 terminates the processing. When the reservation is determined not to be settled, the transmission control section 14 displays selections for determining whether to await reservation cancellation (step ST29). To enable the reservation cancellation wait, the transmission control section 14 advances to step ST30 to await the reservation cancellation. To disable the reservation cancellation wait, the transmission control section 14 advances to step ST31.

To convert the compression rate at step ST31, the transmission control section 14 advances to step ST32. Not to convert the compression rate, the transmission control section 14 terminates the processing.

At step ST32, the transmission control section 14 generates a control signal for compressing a file specified in the media server 12 to decrease the file size, and then returns to step ST24 to repeat the above-mentioned processing.

The data transmission system 1 which performs the above-mentioned processing displays a GUI screen as shown in FIG. 16 when the system sends file data to the data reception apparatus 4 from the data transmission apparatus 2 via the network 3. Even if no file transfer is available according to the user-specified file size and charging amount, the system can create the most approximate alternative and display it on the display section 16 as shown in FIG. 19 for notifying the user of it. For this purpose, the reservation management apparatus 5 references the backbone band management table and the file data charging table based on a transmission condition request. Accordingly, the data transmission system 1 can create an alternative according to the user-specified transmission condition and improve convenience for reserving file transmission.

Moreover, the data transmission system 1 can change a compression rate and create a new alternative by re-referencing the backbone band management table and the reservation band charging table even if no reservation is settled after presentation of an alternative created with reference to the backbone band management table and the file data charging table. This further improves convenience of reservation for file transfer.

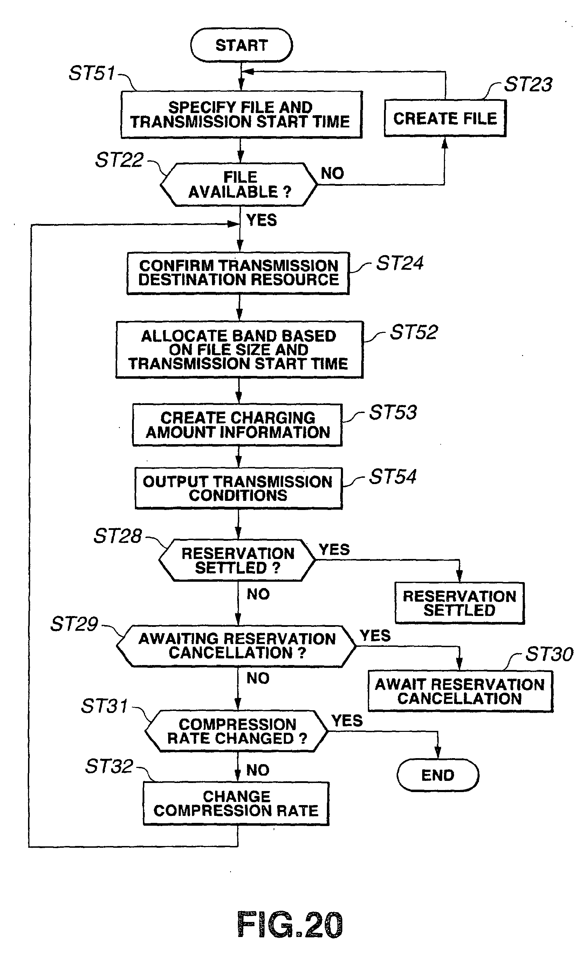

The following describes still other processing steps when the data transmission apparatus 2 transfers file data to the data reception apparatus 4 via the network 3 in the data transmission system 1 with reference to FIG. 20. The following omits detailed description about the same processing as that described with reference to the flowchart in FIG. 15 by using the same step number as used in this flowchart.

With the GUI screen displayed, a user operates the operation/input section 17 to issue an operation/input signal which specifies the reservation condition indicating a file and a transmission start time. This signal is input to the transmission control section 14. According to the operation/input signal, the transmission control section 14 generates transmission condition request information (step ST51).

At the next step ST22, the transmission control section 14 checks if the file specified at step ST51 is available. When the corresponding file data is available, control advances to step ST24. When such file data is unavailable, control advances to step ST23.

At the next step ST23, the transmission control section 14 controls so that an instruction to create a file is output to the media server 12, and then returns to step ST51.

At step ST24, the table management section 36 in the reservation management apparatus 5 confirms a transmission destination resource which should receive data. For this purpose, the table management section 36 references the global resource management table based on the transmission destination information sent from the data transmission apparatus 2.

At the next step ST52, the table management section 36 retrieves a time zone capable of transmission and settles the reservation according to the transmission condition (file size and transmission start time). For this purpose, the table management section 36 references the backbone band management table based on the file size and the transmission start time.

At step ST53, the table management section 36 reads the file data charging table stored in the charging information table storage section 35. Based on the file size in the transmission condition settled in step ST52, the table management section 36 references the file data charging table to create charging amount information.

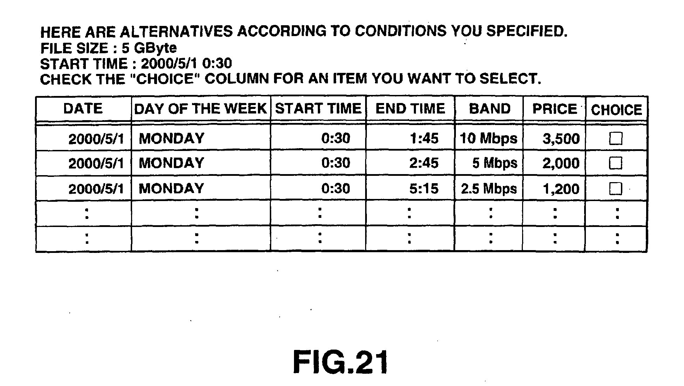

At the next step ST54, the reservation management apparatus 5 uses the output information generation section 38 to create alternative transmission condition information to be presented to the data transmission apparatus 2. The reservation management apparatus 5 sends the alternative transmission condition information to the transmission control section 14 via the network 3. The transmission control section 14 displays the alternative transmission condition information on the display section 16. This information is sent from the reservation management apparatus 5. As a result, for example, alternatives as shown in FIG. 21 are presented to the user.

When the reservation is determined to be settled at the next step ST28, the transmission control section 14 terminates the processing. When the reservation is determined not to be settled, the transmission control section 14 displays selections for determining whether to await reservation cancellation (step ST29). To enable the reservation cancellation wait, the transmission control section 14 advances to step ST30 to await the reservation cancellation. To disable the reservation cancellation wait, the transmission control section 14 advances to step ST31.

To convert the compression rate at step ST31, the transmission control section 14 advances to step ST32. Not to convert the compression rate, the transmission control section 14 terminates the processing.

At step ST32, the transmission control section 14 generates a control signal for compressing a file specified in the media server 12 to decrease the file size, and then returns to step ST24 to repeat the above-mentioned processing.

The data transmission system 1 which performs the above-mentioned processing displays a GUI screen as shown in FIG. 16 when the system sends file data to the data reception apparatus 4 from the data transmission apparatus 2 via the network 3. Even if no file transfer is available according to the user-specified file size and transmission start time, the system can create the most approximate alternative and display it on the display section 16 as shown in FIG. 21 for notifying the user of it. For this purpose, the reservation management apparatus 5 references the backbone band management table based on a transmission condition request. Accordingly, the data transmission system 1 can create an alternative according to the user-specified transmission condition and improve convenience for reserving file transmission.

Moreover, the data transmission system 1 can change a compression rate and create a new alternative by re-referencing the backbone band management table even if no reservation is settled after presentation of an alternative created with reference to the backbone band management table. This further improves convenience of reservation for file transfer.

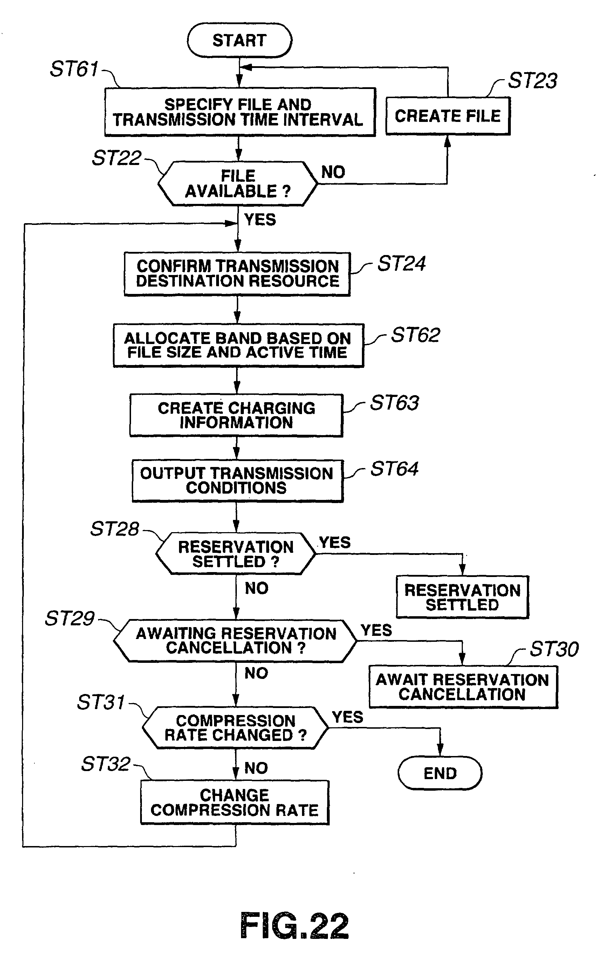

The following describes still other processing steps when the data transmission apparatus 2 transfers file data to the data reception apparatus 4 via the network 3 in the data transmission system 1 with reference to FIG. 22. The following omits detailed description about the same processing as that described with reference to the flowchart in FIG. 15 by using the same step number as used in this flowchart.

With the GUI screen displayed, a user operates the operation/input section 17 to issue an operation/input signal which specifies the reservation condition indicating a file and a transmission time interval. This signal is input to the transmission control section 14. According to the operation/input signal, the transmission control section 14 generates transmission condition request information (step ST61).

At the next step ST22, the transmission control section 14 checks if the file specified at step ST61 is available. When the corresponding file data is available, control advances to step ST24. When such file data is unavailable, control advances to step ST23.

At the next step ST23, the transmission control section 14 controls so that an instruction to create a file is output to the media server 12, and then returns to step ST61.

At step ST24, the table management section 36 in the reservation management apparatus 5 confirms a transmission destination resource which should receive data. For this purpose, the table management section 36 references the global resource management table based on the transmission destination information sent from the data transmission apparatus 2.

At the next step ST62, the table management section 36 retrieves a time zone capable of transmission and settles the reservation according to the transmission condition (file size and transmission time interval). For this purpose, the table management section 36 references the backbone band management table based on the file size and the transmission time interval.

At step ST63, the table management section 36 reads the file data charging table stored in the charging information table storage section 35. Based on the file size and the transmission time interval in the transmission condition settled in step ST62, the table management section 36 references the file data charging table to create charging information.

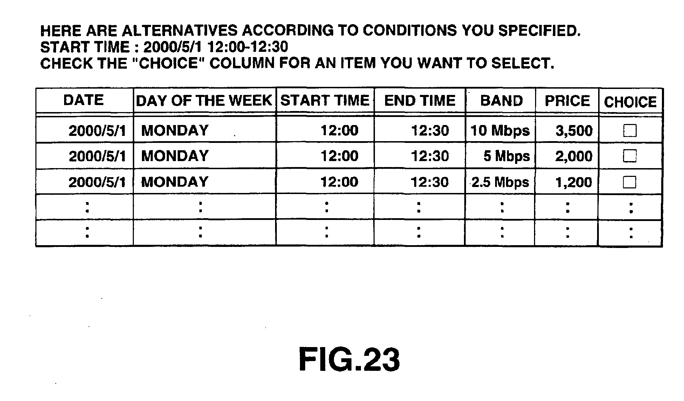

At the next step ST64, the reservation management apparatus 5 uses the output information generation section 38 to create alternative transmission condition information to be presented to the data transmission apparatus 2. The reservation management apparatus 5 sends the alternative transmission condition information to the transmission control section 14 via the network 3. The transmission control section 14 displays the charging information in the transmission condition on the display section 16. This information is sent from the reservation management apparatus 5. As a result, for example, alternatives as shown in FIG. 23 are presented to the user.

When the reservation is determined to be settled at the next step ST28, the transmission control section 14 terminates the processing. When the reservation is determined not to be settled, the transmission control section 14 displays selections for determining whether to await reservation cancellation (step ST29). To enable the reservation cancellation wait, the transmission control section 14 advances to step ST30 to await the reservation cancellation. To disable the reservation cancellation wait, the transmission control section 14 advances to step ST31.

To convert the compression rate at step ST31, the transmission control section 14 advances to step ST32. Not to convert the compression rate, the transmission control section 14 terminates the processing.

At step ST32, the transmission control section 14 generates a control signal for compressing a file specified in the media server 12 to decrease the file size, and then returns to step ST24 to repeat the above-mentioned processing.

The data transmission system 1 which performs the above-mentioned processing displays a GUI screen as shown in FIG. 16 when the system sends file data to the data reception apparatus 4 from the data transmission apparatus 2 via the network 3. Even if no file transfer is available according to the user-specified file size and transmission time interval, the system can create the most approximate alternative and display it on the display section 16 as shown in FIG. 23 for notifying the user of it. For this purpose, the reservation management apparatus 5 references the backbone band management table based on a transmission condition request. Accordingly, the data transmission system 1 can create an alternative according to the user-specified transmission condition and improve convenience for reserving file transmission.

Moreover, the data transmission system 1 can change a compression rate and create a new alternative by re-referencing the backbone band management table even if no reservation is settled after presentation of an alternative created with reference to the backbone band management table. This further improves convenience of reservation for file transfer.

When sending a data stream, the above-mentioned data transmission system 1 displays the GUI screen as shown in FIG. 12. The system can ensure the band and transmit data with reference to the global resource management table, the backbone band management table, and the reservation band charging table according to the transmission condition. When transferring file data, the system displays the GUI screen as shown in FIG. 16. The system can ensure the band and transmit data with reference to the global resource management table, the backbone band management table, and the file data charging table according to the transmission condition. It is possible to transmit data streams and file data through the use of the same network system.

## Claims

1. A data transmission management apparatus comprising:
communication means for connecting a data transmission apparatus for data transmission with a data reception apparatus for receiving data sent from said data transmission apparatus via a communication line;
storage means for storing a band management table describing band availability identification information based on relationship between a split band obtained by dividing a data communication band and a band transmission time interval for each split band via a communication line and resource management information indicating states of a data transmission apparatus and a data reception apparatus connected to said communication means; and
alternative transmission condition information creation means for referencing said band management table and said resource management information stored in said storage means based on a transmission condition request received by said communication means from a data transmission apparatus via a communication line, creating an alternative transmission condition indicative of a condition for allowing said data transmission apparatus to send data to said data reception apparatus, and controlling said communication means in order to send alternative transmission condition information to said data transmission apparatus.

2. The data transmission management apparatus according to claim 1, wherein said alternative transmission condition information creation means creates an transmission condition most approximate to a transmission condition request.

3. The data transmission management apparatus according to claim 1, wherein
said storage means further stores transmission bit rate conversion information describing information for converting a transmission bit rate of a data stream to be sent to said data reception apparatus from said data transmission apparatus; and
said alternative transmission condition information creation means references bit rate conversion information stored in said storage means based on a transmission condition request specifying a transmission bit rate and creates alternative transmission condition information by converting said transmission bit rate.

4. The data transmission management apparatus according to claim 1 having charging amount information generation means for generating charging amount information indicative of a charging amount to be sent to said data transmission apparatus, wherein
said storage means further stores data stream charging information indicative of a charging amount based on relationship between a transmission bit rate and a transmission time and file data charging information indicative of a charging amount based on a file size; and
said charging amount information generation means generates charging amount information using data stream charging information stored in said storage means when said data transmission apparatus transmits a data stream and generates charging amount information using file data charging information stored in said storage means when said data transmission apparatus transmits file data.

5. The data transmission management apparatus according to claim 4, wherein said alternative transmission condition information creation means references data stream charging information or file data charging information stored in said storage means based on a transmission condition request specifying a charging amount and creates alternative transmission condition information.

6. The data transmission management apparatus according to claim 1, wherein said alternative transmission condition information creation means references a band management table stored in said storage means based on a transmission condition request specifying a band for data transmission and creates an alternative transmission condition.

7. The data transmission management apparatus according to claim 1, wherein said alternative transmission condition information creation means references a band management table stored in said storage means based on a transmission condition request specifying a transmission time zone for data transmission and creates an alternative transmission condition.

8. The data transmission management apparatus according to claim 1, wherein said alternative transmission condition information creation means references a band management table stored in said storage means based on a transmission condition request specifying a file size for data transmission and creates an alternative transmission condition.

9. The data transmission management apparatus according to claim 1, wherein said alternative transmission condition information creation means references a band management table stored in said storage means based on a transmission condition request specifying a file size and a transmission end time for data transmission and creates an alternative transmission condition.

10. The data transmission management apparatus according to claim 1, wherein said alternative transmission condition information creation means references a band management table stored in said storage means based on a transmission condition request specifying a file size and a transmission start time for data transmission and creates an alternative transmission condition.

11. The data transmission management apparatus according to claim 4, wherein said alternative transmission condition information creation means references a band management table and file data charging information stored in said storage means based on a transmission condition request specifying a file size and a charging amount for data transmission and creates an alternative transmission condition.

12. The data transmission management apparatus according to claim 1, wherein
said communication means receives information from said data transmission apparatus notifying that an alternative transmission condition does not satisfy a transmission condition request; and
said alternative transmission condition information creation means responds to occurrence of a transmission condition applicable to a transmission condition request and allows a data transmission apparatus to settle reservation for data transmission.

13. The data transmission management apparatus according to claim 1, wherein
said communication means receives information from said data transmission apparatus notifying that an alternative transmission condition does not satisfy a transmission condition request; and
said alternative transmission condition information creation means responds to occurrence of a transmission condition applicable to a transmission condition request and provides control to transmit information indicating said transmission condition applicable to said transmission condition request from said communication means to said data transmission apparatus.

14. The data transmission management apparatus according to claim 13, wherein said alternative transmission condition information creation means responds to occurrence of a transmission condition applicable to a transmission condition request, creates information indicating said transmission condition applicable to said transmission condition request in an electronic mail format, and provides control to send this mail to a data transmission apparatus from said communication means.

15. The data transmission management apparatus according to claim 13, wherein said alternative transmission condition information creation means responds to occurrence of a transmission condition applicable to a transmission condition request, creates information indicating said transmission condition applicable to said transmission condition request, and sends this information to a data transmission apparatus via a mobile communication network.

16. A data transmission management method of transmitting data from a data transmission apparatus to a data reception apparatus via a communication line, comprising the steps of:
creating a band management table describing band availability identification information based on relationship between a split band obtained by dividing a data communication band and a band transmission time interval for each split band via a communication line and resource management information indicating states of a data transmission apparatus and a data reception apparatus connected to said communication means;
referencing said band management table and said resource management information based on a transmission condition request from a data transmission apparatus via a communication line and creating an alternative transmission condition indicative of a condition for allowing a data transmission apparatus to send data to a data reception apparatus; and
transmitting alternative transmission condition information to a data transmission apparatus.

17. The data transmission management method according to claim 16, comprising the steps of creating an alternative transmission condition most approximate to a transmission condition request from a data transmission apparatus and transmitting this alternative transmission condition to a data transmission apparatus.

18. The data transmission management method according to claim 16, comprising the steps of:
creating transmission bit rate conversion information describing information for converting a transmission bit rate of a data stream transmitted to a data reception apparatus from a data transmission apparatus; and
referencing said bit rate conversion information based on a transmission condition request specifying a transmission bit rate, converting a transmission bit rate, and creating alternative transmission condition information.

19. The data transmission management method according to claim 16, comprising the steps of:
creating charging amount information indicative of a charging amount generated due to data transmission and creating data stream charging information indicative of a charging amount based on relationship between a transmission bit rate and a transmission time and file data charging information indicative of a charging amount based on charging information and a file size; and
generating charging amount information by using said data stream charging information when a data transmission apparatus transmits a data stream and generating charging amount information by using said file data charging information when a data transmission apparatus transmits file data.

20. The data transmission management method according to claim 19, comprising the steps of referencing said data stream charging amount information or said file data charging information based on a transmission condition request specifying a charging amount and creating alternative transmission condition information.

21. The data transmission management method according to claim 16, comprising the steps of referencing said band management table based on a transmission condition request specifying a band during data transmission and creating an alternative transmission condition.

22. The data transmission management method according to claim 16, comprising the steps of referencing said band management table based on a transmission condition request specifying a transmission time zone during data transmission and creating an alternative transmission condition.

23. The data transmission management method according to claim 16, comprising the steps of referencing said band management table based on a transmission condition request specifying a file size during data transmission and creating an alternative transmission condition.

24. The data transmission management method according to claim 16, comprising the steps of referencing said band management table based on a transmission condition request specifying a file size and a transmission end time during data transmission and creating an alternative transmission condition.

25. The data transmission management method according to claim 16, comprising the steps of referencing said band management table based on a transmission condition request specifying a file size and a transmission start time during data transmission and creating an alternative transmission condition.

26. The data transmission management method according to claim 19, comprising the steps of referencing said band management table based on a transmission condition request specifying a file size and a charging amount during data transmission and creating an alternative transmission condition.

27. The data transmission management method according to claim 16, comprising the steps of:
receiving information from a data transmission apparatus notifying that a created alternative transmission condition does not conform to a transmission condition request; and
responding to occurrence of a transmission condition applicable to a transmission condition request and allowing a data transmission apparatus to settle reservation for data transmission.

28. The data transmission management method according to claim 16, comprising the steps of:
receiving information from a data transmission apparatus notifying that a created alternative transmission condition does not conform to a transmission condition request; and
responding to occurrence of a transmission condition applicable to a transmission condition request and sending information indicative of a transmission condition applicable to a transmission condition request to a data transmission apparatus.

29. The data transmission management method according to claim 28, comprising the steps of responding to occurrence of a transmission condition applicable to a transmission condition request, creating information indicative of a transmission condition applicable to a transmission condition request in an electronic mail format, and sending this mail to a data transmission apparatus.

30. The data transmission management method according to claim 28, comprising the steps of responding to occurrence of a transmission condition applicable to a transmission condition request, creating information indicative of a transmission condition applicable to a transmission condition request, and sending this information to a data transmission apparatus via a mobile communication network.

31. A data transmission system comprising:
a data transmission apparatus for sending data via a communication line; a data reception apparatus for receiving data sent from said data transmission apparatus via a communication line; and
a data transmission management apparatus having communication means for connecting said data transmission apparatus with said data reception apparatus via a communication line, storage means for storing a band management table describing band availability identification information based on relationship between a split band obtained by dividing a data communication band and a band transmission time interval for each split band via a communication line and resource management information indicating states of said data transmission apparatus and said data reception apparatus connected to said communication means, and alternative transmission condition information creation means for referencing a band management table and resource management information stored in said storage means based on a transmission condition request received by said communication means from said data transmission apparatus via a communication line, creating an alternative transmission condition indicative of a condition for allowing said data transmission apparatus to send data to said data reception apparatus, and controlling said communication means in order to send alternative transmission condition information to said data transmission apparatus, wherein
said data transmission apparatus sends, to said data transmission management apparatus, information for reserving data transmission according to a transmission condition based on alternative transmission condition information sent from said data transmission management apparatus; and
said data transmission management apparatus reserves data transmission according to a transmission condition based on a reservation settling request from said data transmission apparatus.

32. A data transmission method of transmitting data from a data transmission apparatus to a data reception apparatus via a communication line, comprising the steps of:
sending transmission condition information from a data transmission apparatus to a data transmission management apparatus when data is transmitted from a data transmission apparatus to a data reception apparatus;
creating a band management table describing band availability identification information based on relationship between a split band obtained by dividing a data communication band and a band transmission time interval for each split band via a communication line and resource management information indicating states of a data transmission apparatus and a data reception apparatus connected to said communication means;
referencing said band management table and said resource management information based on a transmission condition request from a data transmission apparatus via a communication line, creating an alternative transmission condition indicative of a condition for allowing a data transmission apparatus to send data to a data reception apparatus, and transmitting alternative transmission condition information from a data transmission management apparatus to a data transmission apparatus;
sending, from said data transmission apparatus to said data transmission management apparatus, information for reserving data transmission according to a transmission condition based on alternative transmission condition information sent from said data transmission management apparatus; and
allowing said data transmission management apparatus to reserve data transmission according to a transmission condition based on a reservation settling request from said data transmission apparatus.
